# EUROPÄISCHE PATENTSCHRIFT

(11) **EP 1 590 124 B1**
(45) Veröffentlichungstag und Bekanntmachung des Hinweises auf die Patenterteilung: **30.07.2008**
(21) Anmeldenummer: 03767617.8
(22) Anmeldetag: 22.11.2003
(51) Int. Cl.: B23P 21/00, E06B 3/96, E05C 9/24

(54) **FENSTER ODER T R**
WINDOW OR DOOR
FENETRE OU PORTE

(30) Priorität: 05.02.2003 DE 10304755
(43) Veröffentlichungstag der Anmeldung: 02.11.2005
(73) Patentinhaber: SIEGENIA-AUBI KG, 57234 Wilnsdorf (DE)
(72) Erfinder: GEFFERT, Ansgar, 31249 Hohenhameln (DE); GERSDORF, Oliver, 57587 Birken Honigsessen (DE); OTTO, Erich, 57299 Burbach (DE); ROTGER STEIGEMANN, Carmen, 57078 Siegen (DE); SASSMANNSHAUSEN, Jürgen, 57271 Hilchenbach (DE)
(86) Internationale Anmeldenummer: PCT/EP2003/013153
(87) Internationale Veröffentlichungsnummer: WO 2004/069466

(56) Entgegenhaltungen:
- EP-A- 0 517 552
- DE-A- 10 212 202
- DE-A- 19 908 740
- DE-A- 19 957 358

## Beschreibung

Die Erfindung betrifft ein Fenster, Tür od. dgl. nach dem Oberbegriff des Anspruchs 1. Die Erfindung betrifft aber auch ein Verfahren zur Herstellung eines Flügels für ein derartiges Fenster bzw. eine derartige Tür.

Aus der DE 196 03 770 A1 ist ein Fenster bzw. eine Tür nach dem Oberbegriff des Anspruchs 1 bekannt. Dabei ist vorgesehen, dass der Flügel und der Rahmen aus Profilholmen gebildet wird, welche im Eckbereich durch spezielle Verbindungselemente verbunden werden. Die Verbindungselemente bilden dabei den Eckbereich des Flügels bzw. des Rahmens und erlauben ein Ablängen der dazwischen liegenden Profilholme mittels eines senkrechten Schnittes. Dabei ist auch vorgesehen, dass in den Verbindungselementen bereits Beschlagteile integriert werden, welche mit Kraftübertragungsgliedern die bereits vor Montage des Flügels bzw. des Rahmens in den Profilholmen enthalten sind zusammenwirken. Es sollen auch schon die Kraftübertragungsglieder zusammen mit den Profilholmen abgelängt werden, also bereits vor dem Verarbeiten der üblicherweise als Meterware angelieferten Profilholme in diesen integriert sind.

Aus der DE 199 57 358 A1 ist ein Verfahren zum Bestücken eines Fenster- oder Türflügelrahmens bekannt, der aus Profilholmen eines Hohlprofils gebildet wird, welcher auf Gehrung geschnitten und im Eckbereich verschweißt werden. Die Profilholme bestehen dazu aus Kunststoff und weisen eine im Falzbereich gelegene umlaufende Nut zur Aufnahme eines Schubstangenbeschlages auf. Um die Schubstange in die hinterschnittene Falznut einschieben zu können, soll in den Rahmeneckbereich ein Schlitz eingearbeitet werden, so dass die Hinterschneidung der Falznut zugänglich wird und die Schubstange in das Profil eingeschoben werden kann.

Nachteilig bei dem erstgenannten Stand der Technik ist es, dass bedingt durch die Art der Herstellung des Flügelrahmens zwischen den Kraftübertragungsgliedern und den in den Eckbereichen bereits vorgesehenen Beschlagteilen ein gewisses Fügespiel unvermeidlich ist, welches sich aufgrund der Konzeption jedoch nennenswert aufsummiert. Dabei wären die Eckverbindungselemente auch auf die jeweiligen Profilholme abzustimmen, was in der Praxis durch die Vielzahl der in Anwendung kommenden Profilholme und Profiltypen sehr aufwändig ist. Mehrere Verbindungsstellen bedingen auch höhere Toleranzen und Mehraufwand bei der Herstellung, beeinträchtigen dabei aber gleichzeitig die Optik des Flügels.

Nachteilig bei dem aus der DE 199 57 358 A1 bekannten Verfahren ist es hingegen, dass man für die Montage der Schubstangen jeweils einen gewissen Montageraum vorsehen muss, der - entsprechend dem herzustellenden Flügel - etwa doppelt so groß ist. Die Schubstange muss nämlich etwa der Länge der Falzfläche des herzustellenden Flügels entsprechen und ein entsprechender Raum muss vorgesehen werden, um die Schubstange einschieben zu können.

Der Erfindung liegt daher die Aufgabe zugrunde, die bekannten Nachteile zu vermeiden und überdies eine möglichst einfache Befestigung der Beschlagteile vorzusehen.

Die Lösung dieser Aufgabe gelingt durch die Maßnahmen des kennzeichnenden Teils des Anspruchs 1 und ein Verfahren zur Herstellung eines Flügels entsprechend dem Anspruch 7.

Durch das erfindungsgemäße Fenster bzw. Verfahren zur Herstellung eines Flügels werden zeit- und platzraubende Nachteile der bekannten Herstellung eines derartigen Flügels vermieden. Die Schubstangen können bereits vor der Herstellung und dem Zusammenfügen des Rahmens in die als Meterware angelieferten Profilholme eingeschoben werden oder sogar an Sollbruchstellen an diese anexdrudiert werden und die bekannten und auch vorteilhaften Gehrungsschnitte können dennoch weiterhin ausgeführt werden was die Anzahl der Verbindungsstellen auf ein Mindestmaß reduziert. Dadurch lassen sich auch nahezu alle bereits vorhandenen Maschinen bei der Flügelherstellung verwenden. Die Schubstangen weisen damit insgesamt die gleiche Länge wie die Profilholme auf und werden auch zusammen mit diesen beim Fügen des Rahmens verschweißt, wobei es unweigerlich auch zu einem Verschweißen der Schubstangen an Schubstangenverbindungsstellen untereinander und/oder mit den Profilholmen kommt. Durch Reduzierung der Gesamtlänge der Schubstangen und unter Wegfall der Schubstangenverbindungsstellen wird diese Verbindung wieder aufgehoben und die Schubstangen sind entlang der Profilholme wieder längsverschiebbar. Gleichzeitig wird dadurch auch erreicht, dass der Bewegungshub den die Schubstange ausführen, nicht zu einem Heraustreten der Schubstangen an den Längsenden der Profilholme führt.

Ferner ist vorgesehen, dass an den Profilholmen Aufnahmen für Beschlagteile vorgesehen sind, welche ein Befestigen der Beschlagteile erlauben und die Beschlagteilmitnehmer zur Kopplung einer Beschlagtreibstange mit den Kraftübertragungsgliedern aufweisen, wobei die Mitnehmer aus seitlich vorspringenden Ansätzen der im wesentlichen flach rechteckigen Beschlagtreibstange bestehen und wobei die Kraftübertragungsglieder, also die Schubstangen, in Flügelebene verlaufende Bohrungen oder Ausnehmungen zum Eingriff der Ansätze aufweisen. Durch diese gewählte Anordnung werden die Beschlagteile mit einer eigenen Beschlagtreibstange ausgestattet und können somit im wesentlichen schon vorgefertigt werden. Über die Mitnehmer lassen sich diese dann in einfacher Weise den Schubstangen zuordnen, wobei die Schubstangen wiederum durch einen einfachen und exakt ausführbaren Arbeitsgang mit entsprechenden Kopplungsgliedern versehen werden. Das Einbringen von Bohrungen oder Ausnehmungen in der Flügelebene setzt nämlich im wesentlichen keine Technik voraus, die nicht in dieser oder ähnlicher Form bereits bei Herstellern von Fenstern und Türen vorhanden wäre, denn Ausnehmungen und Bohrungen werden schon jetzt über rechnergesteuerte Fräs- und Bohreinheiten in solchen Profilholmen eingebracht.

Von besonderem Vorteil kann es dabei auch sein, dass die Bohrungen oder Ausnehmungen dabei auch die Falznut zumindest teilweise öffnen, so dass an einer relativ zum Profilholm ortsfest anzubringenden Stulpschiene seitlich vorragende Fixierzapfen in dieser eingreifen. Dies führt zu einer besonders einfachen Festlegung der Stulpschienen und erlaubt die Gestaltung der Beschlagteile in der schon heute üblichen Form mit einer Stulpschiene unter der die Beschlagtreibstange längsverschieblich geführt ist. Die Fixierzapfen sorgen überdies für einen sicheren Halt der Beschlagteile, so dass diese in Längsrichtung der Falznut festgelegt sind. Die kostengünstige Herstellung der Schubstange sieht dabei vor, dass diese aus einem im wesentlichen flachrechteckigen Kunststoffprofil besteht. Von besonderem Vorteil ist es dabei noch, wenn die Schubstange mit ihrer Flachseite längs zur Flügelebene in der Falznut geführt ist. Dies führt im wesentlichen dazu, dass die Schubstange hochkant in der Falznut angeordnet ist und dabei noch vorzugsweise an einem der beiden Längsränder liegt. Selbstverständlich ist es dabei auch denkbar, dass jedem Längsrand der Falznut eine Treibstange zugeordnet wird, so dass die möglichen Übertragungskräfte der Schubstange maximiert werden. Gleichzeitig bleibt aber durch die gewählte Anordnung der Schubstange ein mittlerer Bereich in der Falznut frei, so dass die Beschlagteile in der bekannten Art und Weise an bzw. in der Falznut festgelegt werden können ohne dass es hier zu Langlochausnehmungen in der Schubstange bedarf.

Üblicherweise wären Langlöcher in den Schubstangen notwendig um Befestigungselemente, z.B. Schrauben, vorsehen zu können ohne dass die Verschiebebewegung der Schubstange gehindert wird. Diese Langlöcher reduzieren aber die maximal übertragbaren Bewegungskräfte, da sie den Querschnitt der Schubstangen abschnittsweise reduzieren.

Schließlich betrifft die Erfindung noch ein Verfahren zur Herstellung eines Flügels aus Kunststoff oder Metall entsprechend dem Anspruch 7.

Bei dem beanspruchten Verfahren wird der Flügel in ansich bekannter Weise aus abgelängten Profilstäben mittels eines Klebe- oder Schweißvorgangs zusammengesetzt. Dabei sind bereits Kraftübertragungsglieder in Form von Schubstangen an den Profilstäben vorgesehen und in einer Falznut oder Kammern des Profilstabes längsverschieblich geführt.

Es ist bei einer derartigen Herstellung des Flügels möglich, dass die Schubstangen bereits vor dem Ablängen der Profilholme durch einen Gehrungsschnitt in der Nut oder der Kammer befindlich sind und daher zusammen mit dem Profilholm exakt der Länge der die Schubstangen aufnehmenden Nut oder Kammer abgelängt werden und zusammen mit dem Profilholm verklebt oder verschweißt werden und dass schließlich die Schubstangen an den gemeinsamen Verbindungsstellen miteinander bzw. mit dem Profilholm unter Wegfall der genannten Schubstangenverbindungsstellen gekürzt werden. Alternativ dazu kann natürlich vorgesehen werden, dass die bereits mittels eines Gehrungsschnittes abgelängten Profilholme noch vor dem Zusammenfügen des Flügels mit den ebenfalls mittels eines Gehrungsschnitts auf das Maß der Falznut oder Kammer abgelängten Schubstangen versehen werden, die dann in die Falznut oder Kammer eingeschoben wird. Dieses Vorgehen setzt lediglich das Handhaben des Profilstabes und der darin einzusetzenden Schubstange gleicher Länge voraus, nicht aber das Handhaben eines flächigen und auch schweren Flügels.

Von besonderem Vorteil ist es, wenn das Kürzen der Schubstangen unter Wegfall der gemeinsamen Verbindungsstellen beim Entfernen der Klebe- oder Schweißwülste der Profilholme erfolgt. Derartige allgemein als Putzstation bezeichnete Maschinen sind bereits in vielen Ausführungen bekannt und sorgen beispielsweise im Falle der DE 199 57 358 A1 auch zur Öffnung der Falznut.

Daher kann eine Weiterbildung auch vorsehen, dass das Kürzen der Schubstangen mittels eines Fräsers erfolgt, der in die Kammer oder Nut eintaucht. Alternativ dazu ist es selbstverständlich möglich, dass das Kürzen der Schubstangen mittels eines quer zur Gehrung verlaufenden Sägeschnittes oder ähnlichem erfolgt.

Weiterhin vorteilhaft ist es, wenn die Schubstangen aus einem im wesentlichen flachrechteckigen Kunststoffprofil bestehen, wobei die Schubstangen mit ihren Flachseiten längs zur Flügelebene in einer offenen Falznut geführt sind, wobei die Schubstangen mittels einer in Flügelebene geführten Bohrung Kupplungsöffnungen erhalten. Diese Ausgestaltung erlaubt eine einfache und kostengünstige Herstellung von Verbindungsmitteln mit denen weitere Beschlagteile mit den Schubstangen gekoppelt werden können. Dabei kann das Einbringen der Kupplungsöffnungen auch bereits vor dem Kürzen der Schubstangen erfolgen, da die Beibehaltung der Schubstangenverbindungsstellen gleichzeitig unerwünscht eine Bewegung der Schubstangen innerhalb der Falznut bzw. der Kammer verhindert. Auf diese Art und Weise werden ggf. mögliche Verschiebungen und damit verbundene Probleme bei der Beschlagmontage vermieden.

Weitere vorteilhafte Ausgestaltungen ergeben sich aus den dargestellten Zeichnungen. Es zeigen:
- Fig. 1: eine schematische Übersicht der Bestandteile eines Flügels eines Fensters oder einer Tür mit einem Treibstangenbeschlag,
- Fig. 2: eine räumliche Darstellung des Eckbereichs des Flügels,
- Fig. 3: eine Schnittdarstellung des Eckbereichs des Flügels,
- Fig. 4: einen Schnitt entlang der Linie IV - IV in Fig. 3,
- Fig. 5: einen Ausschnitt eines Profilholms mit einem darin angebrachtem Beschlagteil und
- Fig. 6: ein Beschlagteil zur Montage an einem Flügel.

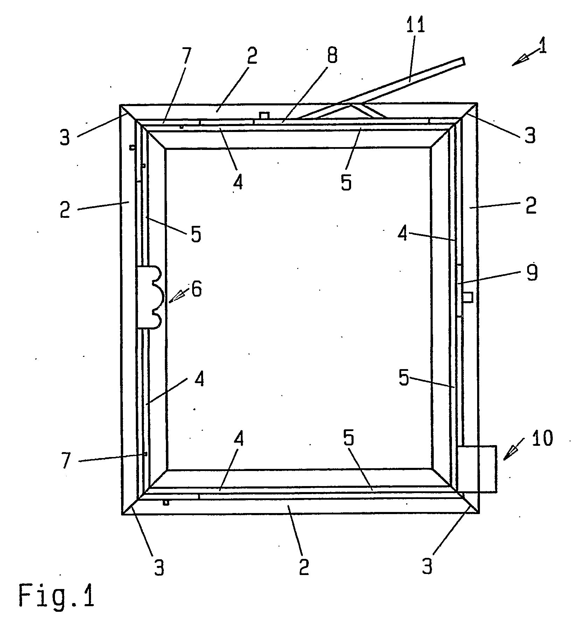

In der Fig. 1 ist der Flügel eines Fensters oder einer Tür mit 1 bezeichnet. Der Flügel 1 wird zusammengesetzt aus den Profilholmen 2, die an ihren Enden über Gehrungsschnitte mit einer Gehrung 3 versehen sind. Bei dem dargestellten fertig montierten Flügel 1 sind in einer hinterschnittenen Falznut eines jeden Profilholms 2 Schubstangen 5 vorgesehen. Angetrieben werden die Schubstangen 5 über einen Treibstangenantrieb 6, der z.B. manuell von einer Bedienperson betätigt werden kann. Die Schubstangen 5 stehen in Antriebsverbindung mit Beschlagteilen 7, 8, 9 wobei das Bezugszeichen 7 eine Eckumlenkung, das Bezugszeichen 8 eine Ausstellvorrichtung und das Bezugszeichen 9 eine Verriegelung bezeichnet. Ferner ist an dem Flügel 1 noch ein Band 10 vorgesehen, welches als untere Scharnierlagerung des Flügels 1 dient. An dem Ausstellarm 11 der Ausstellvorrichtung 8 ist ebenfalls ein hier nicht dargestelltes Band vorgesehen, welches mit einem am Blendrahmen ortsfest angebrachten Lagerbock und einem Scharnierbolzen eine obere Lagerung des Flügels 1 bildet.

Der Flügel 1 soll bei dem dargestellten Ausführungsbeispiel aus Hohlprofilen aus Kunststoff gebildet sein, die als Meterware z.B. in sechs Meter langen Stäben angeliefert werden. Mittels einer Gehrungssäge werden die Profilholme 2 entsprechend dem beabsichtigten Maß des Flügels 1 abgelängt, so dass die auf Gehrung 3 geschnittenen Profilholme 2 zu dem dargestellten Rechteckrahmen zusammengefügt werden können. Die Profilholme 2 werden dabei über einen Stumpfschweißvorgang miteinander verbunden, d.h. die jeweiligen Enden der Profilholme 2 werden an einer Kontaktfläche erhitzt und anschließend zusammengepreßt, so dass der zumindest teilweise verflüssigte Kunststoff der zu verbindenden Profilholme 2 sich entlang der Gehrung 3 stoffschlüssig verbindet.

Bei dem dargestellten Ausführungsbeispiel ist vorgesehen, dass die Schubstangen 5 bereits in den Profilholmen 2 angeordnet sind, bevor diese mittels des Gehrungsschnitts abgelängt werden. Dementsprechend werden die Schubstangen 5 exakt in der Länge des jeweiligen Profilholms 2 bzw. der die Schubstangen 5 aufnehmenden Falznut abgelängt und reichen ebenfalls bis an die Gehrung 3 heran. Beim Verbinden der Profilholme 2 entlang der Gehrung 3 werden also auch die Schubstangen 5 aneinanderstoßen und - in einer bevorzugten Ausgestaltung der Schubstangen als Kunststoffhohlprofil - an Schubstangenverbindungsstellen miteinander verschweißt.

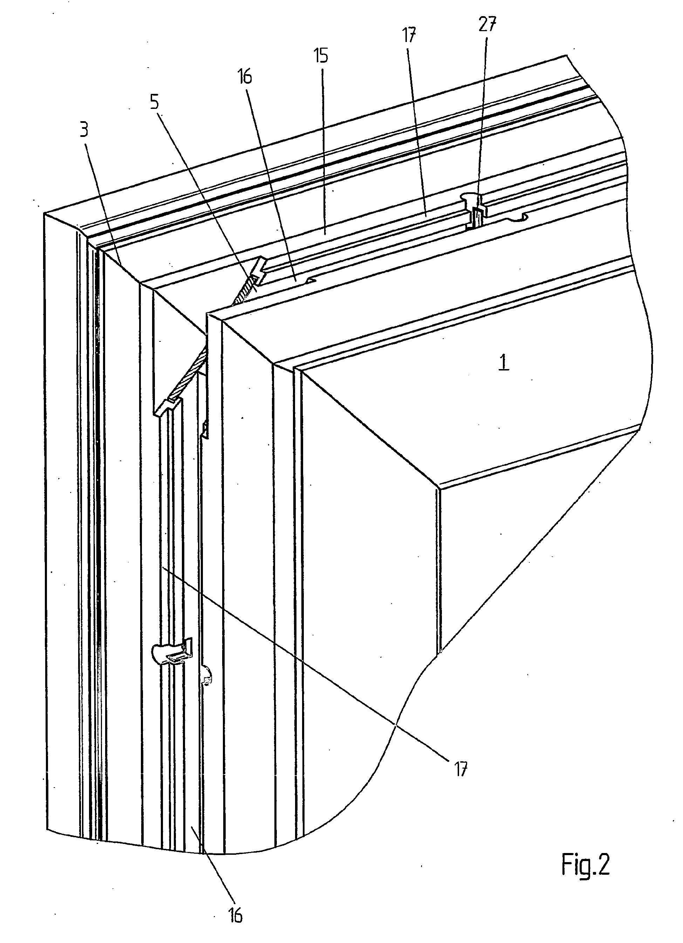

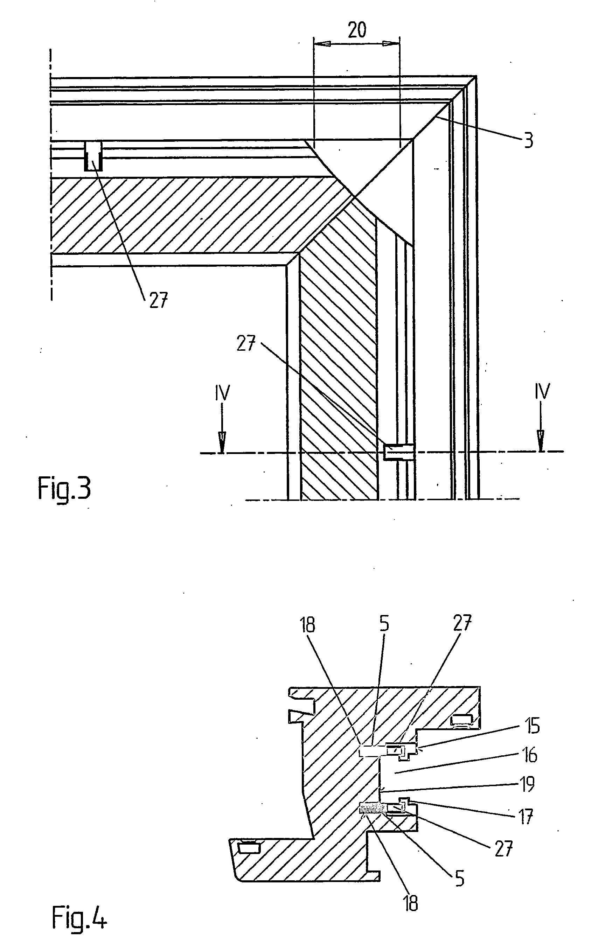

Die genaue Anordnung der Schubstangen 5 ergibt sich aus dem in Fig. 2 dargestellten Eckbereich des Flügels 1. In Fig. 3 ist die Gehrung 3 erkennbar, obgleich der Flügel 1 bereits von überstehenden Schweißwülsten entlang der Gehrung 3 befreit ist. Dies erfolgt üblicherweise mittels eines Fräsers welcher die Kontur des Profils abfährt oder einem entsprechenden Werkzeug welches auf die Kontur des Profils bzw. der Profilholme 2 abgestimmt ist. Jeder Profilholm 2 weist die entlang des Falzes 15 verlaufende Falznut 16 auf, welche als hinterschnittene Nut eine Nutstufe 17 bildet. In dem Hinterschnitt der Nutstufe 17 ist die Schubstange 5 angeordnet und zwar als Kunststoffprofil flachrechteckigen Querschnitts. Wie in Verbindung mit der Fig. 4 deutlich wird ist die Schubstange 5 dabei mit ihrer Flachseite 18 so ausgerichtet, dass diese längs zur Flügelebene verläuft, also senkrecht zum Grund 19 der Falznut 16 ausgerichtet ist. In den Fig. 2 und 3 sind die ursprünglich miteinander verschweißten und bis an die Gehrung 3 heranreichenden Schubstangen 5 durch einen beispielsweise in Flügelebene ausgerichteten und in die Falznut 16 eingreifenden Fräser um ein Maß 20 - ausgehend von der Gehrung 3 - gekürzt. Dies erfolgt z.B. beim sogenannten Putzen des Flügels 1, bei dem alle überschüssigen Schweißwülste des Stumpfschweißens wie vorstehend bereits beschrieben, entfernt werden. Der Fräser soll dabei nicht nur die Form der Falznut 16 wieder herstellen, sondern über dies auch die beim Verschweißen der Schubstangen entstehende Schubstangenverbindungsstelle entfernen. Dadurch können die bis dahin unverschieblichen Schubstangen 5 wieder in dem Hinterschnitt der Nutstufe 17 längs der Falznut 16 verschoben werden.

Auf diese Weise lassen sich die Schubstangen 5 ohne dass es einem zusätzlichen Arbeitsgangs bedarf, exakt auf die Länge der Profilholme 2 abstimmen und gleichzeitig eine einfache Montage der Schubstangen 5 bewerkstelligen. Besonders vorteilhaft ist dabei die Ausgestaltung nach Fig. 4, bei der zwei Schubstangen in Längsrichtung der Falznut 16 vorgesehen sind. Durch die gleichzeitige Bearbeitung beider Schubstangen 5 wird eine exakte Zuordnung dieser zueinander bewerkstelligt, so dass die übertragbaren Kräfte der Schubstangen 5 verdoppelt werden. Dadurch wird die Ausgestaltung der Schubstange 5 auch aus weniger tragfähigem Material, nämlich z.B. dem bereits vorgenannten Kunststoff, möglich, ohne dass die übertragbaren Kräfte reduziert werden müssen.

Obgleich das dargestellte Ausführungsbeispiel auf ein Kunststoffhohlprofil hinweist, bei dem die Schubstangen 5 bereits vor Ablängen des Profilholms 2 in das entsprechende Profil eingeschoben werden, kann natürlich alternativ dazu auch vorgesehen werden, dass die Schubstangen 5 in einem separaten Arbeitsgang entsprechend der Länge der Falznut 16 abgelängt werden und vor dem Verschweißen oder Verkleben der Profilholme 2 in die entsprechenden Falznuten 16 eingeschoben werden. Dies ermöglicht immerhin noch die Montage der Schubstangen 15 an leicht handzuhabenden Profilholmen 2 und vermeidet das Bewegen eines flächigen und daher schwer zu handhabenden Flügels 1.

Auch ist die Fertigung des Flügels 1 aus Profilholmen 2 nicht auf Schweißen beschränkt. So kann beispielsweise vorgesehen werden, dass das Hohlprofil aus Metall gebildet wird und mittels eines Klebevorgangs zusammengesetzt wird. Dabei kann unter Umständen auch ein die Verbindung stabilisierendes Eckwinkelteil in einer Kammer des Hohlprofils vorgesehen werden. Um die Verbindung des Hohlprofils mit diesem Eckwinkelteil bzw. der Profilholme 2 untereinander zu bewerkstelligen, wird auf die Gehrung 3 ein Klebstoff aufgebracht, der zum einen den Kontakt der Profilholme 2 untereinander als auch mit dem ggf. vorzusehenden Eckwinkelteil sicherstellen soll. Gleichzeitig wird dadurch auch das Eindringen von Wasser und Verschmutzungen verhindert. Dementsprechend sind zur Vereinfachung die gesamten Gehrungsflächen mit dem Klebstoff zu versehen und daher auch die Schubstangen 5. Mittels des anschließenden Kürzens der Schubstangen 5 und dem dadurch gegebenen Entfernen der Schubstangenverbindungsstelle wird dadurch auch bei einem Klebevorgang die Schubstange 5 wieder in der Falznut 16 frei beweglich.

Die in Fig. 1 dargestellte Anordnung eines Schubstangenbeschlages soll die Öffnungsfunktionen des Flügels 1 sicherstellen. Derartige Flügel 1 lassen sich üblicherweise drehen, also um eine aufrechte Achse verschwenken. Daneben ist noch eine Verschlussstellung vorgesehen, in der der Flügel 1 an dem - hier nicht dargestellten - Blendrahmen festgelegt werden kann. Über die Ausstellvorrichtung 8 kann daneben auch noch eine Schwenkbewegung des Flügels 1 um eine untere horizontale Achse begrenzt werden, bei der der Flügel 1 lediglich am unteren waagerecht verlaufenden Profilholm 2 an dem Blendrahmen anliegt.

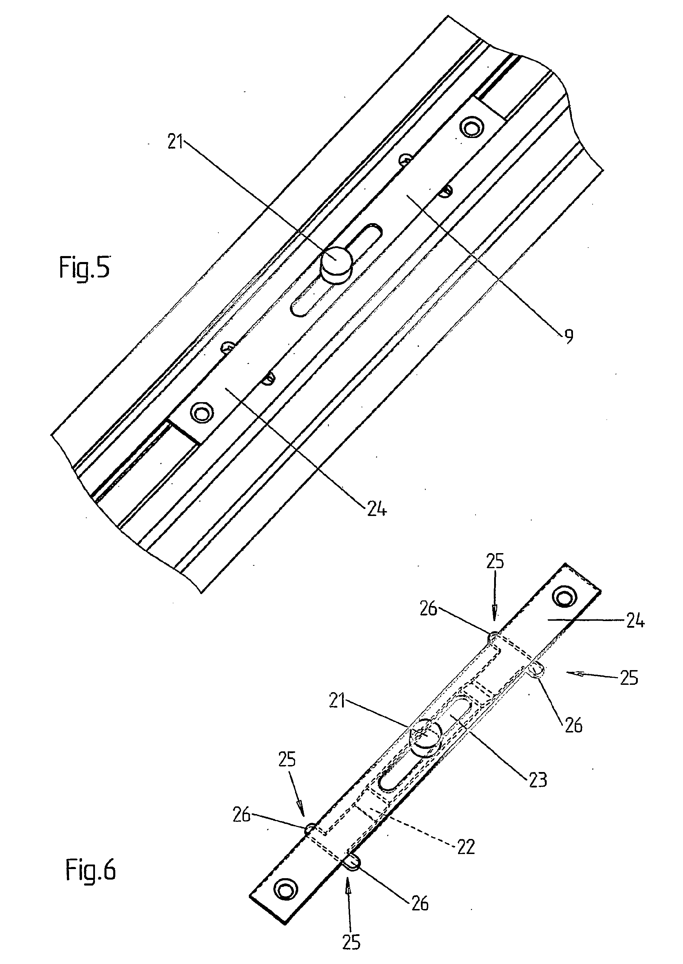

Zur Steuerung dieser Funktionen wird die Schubstange 5 über den Treibstangenantrieb 6 bewegt und an den Beschlagteilen 7, 8, 9 vorgesehene Verriegelungs- und Funktionsglieder bewirken die jeweilige Freigabe bzw. das jeweilige Festlegen des Flügels 1 an dem Blendrahmen. In der Fig. 5 ist eine Verriegelung 9 dargestellt, welche zum Festlegen des Flügels 1 an dem Blendrahmen dient. Dazu ist die Verriegelung 9 mit einem Zapfen 21 versehen, der mit einem nicht dargestellten Riegeleingriff am Blendrahmen zusammenwirkt. Der Zapfen 21 ist über die in Fig. 6 angedeutete Beschlagtreibstange 22 in einem Langloch 23 einer Stulpschiene 24 verschiebbar. Die Stulpschiene 24 sitzt auf der Nutstufe 17 der Falznut 16 auf und deckt die Beschlagtreibstange 22 ab. Zur Kopplung der Beschlagtreibstange 22 und damit des darauf befestigten Zapfens 21 mit den Schubstangen 5 ist die Beschlagtreibstange 22 mit Mitnehmern 25 versehen, die aus seitlich vorspringenden Ansätzen 26 der ansonsten flach rechteckigen Beschlagtreibstange 22 bestehen. Diese greifen in Ausnehmungen oder Bohrungen 27 der Schubstangen 5 ein, welche im wesentlichen quer zur Längsachse der Schubstangen 5 verlaufen. Die Ausnehmungen bzw. Bohrungen 27 werden vorzugsweise über einen in Flügelebene ausgeführten Bohrvorgang erzeugt, durch welchen auch die Nutstufe 17 und ggf. ein Teil des Falzes 15 entfernt wird. Dieser Bohrvorgang kann beispielsweise zusammen mit dem Entfernen der Schweiß- oder Klebwülste des Flügels 1 vorgenommen werden. Es kann aber auch vorgesehen werden, dass die Ausnehmung bzw. Bohrung 27 bereits zu einem früheren Zeitpunkt eingebracht werden, insbesondere da dadurch sichergestellt ist, dass die Schubstangen 5 noch unverrückbar in der Falznut 16 gelagert sind. Dies ermöglicht eine Maßgenaue und nahezu toleranzfreie Einbringung der Ausnehmungen/Bohrungen 27.

Durch das Entfernen der Nutstufe 17 der Falznut 16 lassen sich nun die Beschlagteile 7, 8, 9 senkrecht zum Falz 15 an bzw. in der Falznut 16 befestigen, wobei die seitlich vorspringenden Ansätze 26 auch die Stulpschiene 24 seitlich überragend in die Ausnehmungen/Bohrungen 27 der Schubstangen 5 einrücken.

Dadurch lassen sich die Verriegelungen 9 entsprechend der Fig. 6 an nahezu jedem beliebigen Ort des Flügels 1 vorsehen und in einfacher Art und Weise montieren.

Dabei ist es auch von Vorteil, dass die Schubstangen 5 in der in Fig. 4 dargestellten Ausrichtung senkrecht zum Grund 19 diesen nicht verdecken. Dadurch lassen sich - nicht dargestellte - Befestigungselemente z. B. Befestigungsschrauben für die Beschlagteile 7, 8, 9 in den Grund 19 einbringen ohne dass es Langlochausnehmungen in den Schubstangen 5 oder der Beschlagtreibstange 22 bedarf. Selbstverständlich können insbesondere zum Festlegen der Stulpschiene 24 nahe dem Zapfen 21 auch hier noch entsprechende Befestigungselemente vorgesehen werden, die dann ein entsprechendes Langloch in der Beschlagtreibstange 22 durchgreifen müssten. Diese lassen sich aber aufgrund ihrer geringen Abmessungen relativ leicht herstellen und sind überdies in großen Stückzahlen kostengünstig zu produzieren.

Abweichend von den Fig. 5 und 6 kann dabei auch noch vorgesehen werden, dass die Stulpschiene 24 mit entsprechenden seitlich über die Längskante vorstehenden Ansätzen versehen ist, welche die Ausnehmung/Bohrung 27 in/an dem Falz 15 abdecken bzw. verschließen. Dadurch wird eine Längsverschiebung der Stulpschiene 24 unter Last zuverlässig vermieden und das Eindringen von Verschmutzungen in die Falznut 16 verhindert.

Ein Verfahren zur Herstellung des Flügels 1 aus Profilholmen aus Kunststoff oder Metall wäre demnach bestehend aus den Arbeitsschritten:
a Ablängen der Profilholme 2 ggf. zusammen mit den Schubstangen 5 oder separates Ablängen der Schubstangen 5 entsprechend der Länge der Falznut 16 und anschließendes Einschieben in die Falznut 16 bei noch ungefügten Profilholmen,
b Verbinden der Profilholme 2 und der Schubstangen 5 durch einen Klebe- oder Schweißvorgang,
c Kürzen der Schubstangen 5 an den gemeinsamen Schubstangenverbindungsstellen

Das Kürzen der Schubstangen 5 an den gemeinsamen Schubstangenverbindungsstellen kann mit Vorteil beim Entfernen der Klebe- oder Schweißwülste erfolgen, da hier ohnehin ein Werkzeugeingriff notwendig wird.

### Bezugszeichenliste

- 1: Flügel
- 2: Profil
- 3: Gehrung
- 5: Schubstange
- 6: Treibstangenantrieb
- 7: Eckumlenkung
- 8: Ausstellvorrichtung
- 9: Verriegelung
- 10: Band
- 11: Ausstellarm
- 15: Falz
- 16: Falznut
- 17: Nutstufe
- 18: Flachseite
- 19: Grund
- 20: Maß
- 21: Zapfen
- 22: Beschlagtreibstange
- 23: Langloch
- 24: Stulpschiene
- 25: Mitnehmer
- 26: Ansatz
- 27: Ausnehmung

## Patentansprüche

1. Fenster oder eine Tür, dessen Flügel (1) aus vier im Eckbereich durch Kleben oder Schweißen miteinander verbundenen Profilholmen (2) gebildet ist, wobei die Profilholme (2) Kraftübertragungsglieder in der Form von Schubstangen (5) aufweisen, welche insbesondere gemeinsam mit den Profilholmen (2) abgelängt sind und in hinterschnittenen Falznuten (16) der Profilholme (2) im Gebrauchszustand längsverschiebbar geführt sind,
**dadurch gekennzeichnet,**
**dass** die Schubstangen (5) zusammen mit den Profilholmen (2) durch Gehrungsschnitte abgelängt sind oder eine Länge entsprechend der Falznut (16) haben und dass die Schubstangen (5) aneinander und/oder zusammen mit dem Profilholmen (2) im Eckbereich unter Bildung von Schubstangenverbindungsstellen verklebt oder verschweißt sind, so dass die Schubstangen (5) danach an den gemeinsamen Verbindungsstellen miteinander bzw. mit dem Profilholm unter Wegfall der genannten Schubstangenverbindungsstellen gekürzt werden können.

2. Fenster oder Tür nach Anspruch 1, **dadurch gekennzeichnet, dass** die Schubstangenverbindungsstellen z.B. mittels eines Fräsers unter Reduzierung der Gesamtlänge der Schubstangen (5) entfernbar sind.

3. Fenster oder Tür nach Anspruch 1 oder 2, **dadurch gekennzeichnet,**
**dass** an den Profilholmen (2) Aufnahmen für Beschlagteile (7, 8, 9) vorgesehen sind, welche eine Befestigung der Beschlagteile (7, 8, 9) erlauben,
**dass** die Beschlagteile (7, 8, 9) Mitnehmer (25) zur Kopplung einer Beschlagtreibstange (22) mit den Schubstangen (5) aufweisen,
und **dass** die Mitnehmer (25) aus seitlich vorspringenden Ansätzen (26) der im wesentlichen flachrechteckigen Beschlagtreibstange (22) bestehen, wobei die Schubstangen (5) in Flügelebene verlaufende Bohrungen (27) oder Ausnehmungen zum Eingriff der Ansätze (26) aufweisen.

4. Fenster oder Tür nach Anspruch 3, **dadurch gekennzeichnet, dass** die Bohrungen (27) oder Ausnehmungen dabei auch die Falznut (16) zumindest teilweise öffnen, so dass an einer relativ zum Profilhoim (2) ortsfest anzubringenden Stulpschiene (24) seitlich vorragende Fixierzapfen in diese eingreifen.

5. Fenster oder Tür nach Anspruch 3 oder 4, **dadurch gekennzeichnet, dass** die Schubstangen (5) aus einem im wesentlichen flachrechteckigen Kunststoffprofil besteht.

6. Fenster oder Tür nach Anspruch 5, **dadurch gekennzeichnet, dass** die Schubstangen (5) mit ihren Flachseiten (18) längs zur Flügelebene in der Falznut (16) geführt sind.

7. Verfahren zur Herstellung eines Flügels (1) aus Kunststoff oder Metall, der aus mehreren abgelängten Profilholmen (2) mittels eines Klebe- oder Schweißvorganges zusammengesetzt ist und Kraftübertragungsglieder in Form von Schubstangen (5) aufweist, die in einer Falznut (16) oder Kammer der Profilholme (2) längsverschieblich geführt sind,
**dadurch gekennzeichnet, dass** die Schubstangen (5) bereits vor dem Ablängen durch einen Gehrungsschnitt der Profilholme (2) in der Falznut (16) oder der Kammer befindlich sind oder vor dem Zusammenfügen des Flügels (1) in die mittels eines Gehrungsschnittes auf das Maß der Falznut (16) oder Kammer abgelängt und in diese eingeschoben und anschließend zusammen mit dem Profilholm (2) verklebt oder verschweißt werden, und dass die Schubstangen (5) an den gemeinsamen Schubstangenverbindungsstellen gekürzt werden.

8. Verfahren zur Herstellung eines Flügels nach Anspruch 7, **dadurch gekennzeichnet, dass** die Schubstangen (5) beim Entfernen der Klebe- oder Schweißwülste der Profilholme (2) gekürzt werden.

9. Verfahren zur Herstellung eines Flügels nach Anspruch 7 oder 8, **dadurch gekennzeichnet, dass** das Kürzen der Schubstangen (5) mittels eines Fräsers erfolgt, der in die Kammer oder Falznut (16) eintaucht.

10. Verfahren zur Herstellung eines Flügels nach einem der Ansprüche 7 bis 9,
**dadurch gekennzeichnet, dass** die Schubstangen (5) aus einem im wesentlichen flachrechteckigen Kunststoffprofil bestehen, wobei die Schubstangen (5) mit ihren Flachseiten (18) längs zur Flügelebene in einer offenen Falznut (16) geführt sind und wobei die Schubstangen (5) mittels einer in Flügelebene ausgeführten Bohrung (27) Kupplungsöffnungen erhalten.

## Claims

1. Window or a door, of which the casement or leaf (1) is formed from four profiled bars (2) which are connected to one another in the corner region by adhesive bonding or welding, it being the case that the profiled bars (2) have force-transmission members in the form of push rods (5) which are cut to length, in particular, together with the profiled bars (2) and are guided such that they can be displaced longitudinally, in the use state, in undercut rebate grooves (16) in the profiled bars (2),
**characterized**
**in that** the push rods (5) are cut to length, together with the profiled bars (2), by mitre cuts or have a length corresponding to the rebate groove (16), and in that the push rods (5) are adhesively bonded or welded on one another and/or together with the profiled bars (2) in the corner region to form push-rod connecting locations, in which case the push rods (5) can then be shortened at the joint locations of connection to one another or to the profiled bar, with the abovementioned push-rod connecting locations being done away with in the process.

2. Window or door according to Claim 1, **characterized in that** the push-rod connecting locations can be removed, for example, by means of a milling cutter, with the overall length of the push rods (5) being reduced in the process.

3. Window or door according to Claim 1 or 2, **characterized by** the provision, on the profiled bars (2), of holders which are intended for fitting parts (7, 8, 9) and allow the fitting parts (7, 8, 9) to be fastened, in that the fitting parts (7, 8, 9) have drivers (25) for coupling a fitting driving rod (22) to the push rods (5), and in that the drivers (25) comprise laterally projecting extensions (26) of the essentially flat-rectangular fitting driving rod (22), the push rods (5) having apertures or bores (27), running in the plane of the window casement or door leaf, in which the extensions (26) can engage.

4. Window or door according to Claim 3, **characterized in that** the bores (27) or apertures here also open the rebate groove (16) at least in part, in which case laterally projecting fixing pins on a lock-case-front rail (24), which can be fitted in a stationary manner relative to the profiled bar (2), engage in the same.

5. Window or door according to Claim 3 or 4, **characterized in that** the push rods (5) comprise an essentially flat-rectangular plastic profile.

6. Window or door according to Claim 5, **characterized in that** the push rods (5) are guided in the rebate groove (16), by way of their flat sides (18), longitudinally in relation to the plane of the window casement or door leaf.

7. Method of producing a plastic or metal window casement or door leaf (1) which is made up of a plurality of cut-to-length profiled bars (2), by means of an adhesive-bonding or welding operation, and has force-transmission members in the form of push rods (5) which are guided such that they can be displaced longitudinally in a rebate groove (16) or chamber in the profiled bars (2),
**characterized in that**, even before being cut to length by a mitre cut in the profiled bars (2), the push rods (5) are located in the rebate groove (16) or the chamber or, prior to the casement or leaf (1) being joined together, the push rods are cut, by means of a mitre cut, to the length of the rebate groove (16) or chamber and pushed into the same and then adhesively bonded or welded together with the profiled bar (2), and **in that** the push rods (5) are shortened at the joint push-rod connecting locations.

8. Method of producing a window casement or door leaf according to Claim 7, **characterized in that** the push rods (5) are shortened when the adhesive-bonding or welding beads of the profiled bars (2) are removed.

9. Method of producing a window casement or door leaf according to Claim 7 or 8, **characterized in that** the push rods (5) are shortened by means of a milling cutter which penetrates into the chamber or rebate groove (16).

10. Method of producing a window casement or door leaf according to one of Claims 7 to 9, **characterized in that** the push rods (5) comprise an essentially flat-rectangular plastic profile, the push rods (5) being guided in an open rebate groove (16), by way of their flat sides (18), longitudinally in relation to the plane of the window casement or door leaf, and the push rods (5) being provided with coupling openings by means of a bore (27) made in the plane of the window casement or door leaf.

## Revendications

1. Fenêtre ou une porte, dont le battant (1) est formé par quatre profilés (2), qui sont reliés ensemble par collage ou par soudure, les profilés (2) présentant des organes de transmission de force sous la forme de tiges de poussée (5), qui sont coupés à longueur, en particulier en commun avec les profilés (2), et qui, en état de fonctionnement, sont guidés, mobiles dans le sens de la longueur, dans des rainures de feuillure (16) contre-dépouillées des profilés (2),
**caractérisée en ce que**
les tiges de poussée (5) sont coupées à longueur, en commun avec les profilés (2), par coupe en onglets, ou ont une.longueur qui correspond à la rainure de feuillure (16), et **en ce que** les tringles de poussée (5, 6) sont collées ou soudées l'une avec l'autre et / ou en commun avec les profilés (2), dans la région des angles, en formant des points de jonction des tiges de poussée, de sorte que les tiges de poussée (5) peuvent être raccourcies, ensemble, respectivement avec le profilé (2), aux points de jonction communs, en supprimant lesdits points de jonction des tiges de poussée.

2. Fenêtre ou porte selon la revendication 1, **caractérisée en ce que** les points de jonction des tiges de poussées peuvent être éliminés, par exemple au moyen d'une fraise, en réduisant la longueur totale des tiges de poussée (5).

3. Fenêtre ou porte selon revendication 1 ou 2, **caractérisée en ce que** sont prévus, sur les profilés (2), des réceptacles pour des ferrures (7, 8, 9), qui permettent une fixation des ferrures (7, 8, 9), **en ce que** les ferrures (7, 8, 9) présentent des entraineurs (25) pour le couplage d'une crémone (22) avec des tiges de poussée (5), et **en ce que** les entraîneurs (25) consistent en appendices (26) en saillie latérale de la crémone (22) sensiblement rectangulaire, plate, les tiges de poussée (5) présentant des alésages (27) ou des évidements qui s'étendent dans le plan du battant pour l'enclenchement des appendices (26).

4. Fenêtre ou porte selon la revendication 3, **caractérisée en ce que** les alésages (27) ou les évidements ouvrent aussi la rainure de feuillure (16), au moins partiellement, de sorte que des goujons de fixation, en saillie latérale sur une têtière (24), qui doit être montée fixe par rapport au profilé (2), s'engagent dans celle-ci.

5. Fenêtre ou porte selon revendication 3 ou 4, **caractérisée en ce que** les tiges de poussée (5) consistent en un profilé en matière plastique, sensiblement rectangulaire, plat.

6. Fenêtre ou porte selon la revendication 5, **caractérisée en ce que** les tiges de poussée (5) sont guidées, avec leurs côtés plats (18), le long du plan du battant, dans la rainure de feuillure (16).

7. Procédé pour la fabrication d'un battant (1) en matière plastique ou en métal, qui est composé de plusieurs profilés (2), coupés à longueur, assemblés au cours d'un processus de collage ou de soudage, et qui présente des organes de transmission de force en forme de tiges de poussée (5) qui peuvent être guidés, mobiles dans le sens de la longueur, dans une rainure de feuillure (16) ou une chambre des profilés (2),
**caractérisé en ce que** les tiges de poussée (5) se trouvent déjà dans la rainure de feuillure (16) ou dans la chambre avant la coupe à longueur par coupe en onglets des longerons profilés (2), ou, avant le montage du battant (1) sont coupées à longueur, par coupe en onglets, à la dimension de la rainure de feuillure (16) ou de la chambre, et collées ou soudées ensuite au profilé (2), et **en ce que** les tiges de poussée (5) sont raccourcies aux point de jonction des tiges de poussée.

8. Procédé pour la fabrication d'un battant selon la revendication 7, **caractérisé en ce que** les tiges de poussée (5) sont raccourcies lors de l'élimination des bourrelets de collage ou de soudure des profilés (2).

9. Procédé pour la fabrication d'un battant selon revendication 7 ou 8, **caractérisé en ce que** le raccourcissement des tiges de poussée (5) est effectué au moyen d'une fraise qui plonge dans la chambre ou dans la rainure de feuillure (16).

10. Procédé pour la fabrication d'un battant selon l'une des revendications 7 bis 9, **caractérisé en ce que** les tiges de poussée (5) consistent en un profilé en matière plastique sensiblement rectangulaire, plat, les tiges de poussée (5) étant guidées avec leurs côtés plats (18) le long du plan du battant, dans une rainure de feuillure (16) ouverte, et les tiges de poussée (5) étant pourvues d'ouvertures de couplage au moyen d'un alésage (27) qui est exécuté dans le plan du battant.
